# EUROPEAN PATENT APPLICATION

(11) **EP 4 303 430 A1**
(43) Date of publication of application: **10.01.2024**
(21) Application number: 22182740.5
(22) Date of filing: 04.07.2022
(51) Int. Cl.: F03D 1/06, F03D 13/10

(54) **WIND TURBINE ASSEMBLY SYSTEM AND METHOD FOR ASSEMBLING A WIND TURBINE**

(71) Applicant: Siemens Gamesa Renewable Energy A/S, 7330 Brande (DK)
(72) Inventor: Mengel, Asger, 7100 Vejle (DK)
(74) Representative: SGRE-Association

(57) **Abstract**

The present invention relates to a wind turbine assembly system (1), comprising a first portion (2), a second portion (3) which is connectable to the first portion (2), a first aligning device (4), attached to the first portion (2) and a second aligning device (5), attached to the second portion (3). The first aligning device (4) comprises an engagement section (6) in a center area of the first portion (2) and a holding section (7) for holding the engagement section (6), wherein the second aligning device (5) is configured for engaging with the engagement section (6). The invention further relates to a method for assembling a wind turbine (20).

## Description

The present invention relates to a wind turbine assembly system. The invention also relates to a method for assembling a wind turbine.

It is known that rotor blades of modern wind turbines are made of composite materials, such as fiber reinforced plastics or the like. Such rotor blades typically comprise a main section with a tip end and a root section, wherein the main section is usually flat and the root section has a substantially round cross-section. Furthermore, the main section has a rounded leading edge and a sharp trailing edge and is usually substantially longer than the root section.

The root section of the rotor blade is configured for being assembled to a pitch bearing of a hub of the wind turbine. By means of the pitch bearing, a pitch angle of the rotor blade can be adjusted with respect to the hub. Standard pitch bearings are configured as rolling bearings. The hub is part of a nacelle, which is mounted on top of a tower of the wind turbine.

A challenging assembly step of a wind turbine, especially a large scale offshore wind turbine in an environment of constant heavy winds, waves and swell, is the mounting of the rotor blade to the pitch bearing at the hub. This process is also referred to as *"blade landing".* At sea environment, there is a comparatively large relative movement between the hub and the rotor blade in the yoke. The rotor blade is normally held almost still in the yoke, while the tower with the hub mounted thereon is swaying in several directions, depending on the wind, waves and swell.

Simulations have shown that from NG11 and above, relative movements between the blade in the yoke and the pitch bearing of the hub can exceed the allowed relative movement, which is dependent on the design of the components. Therefore, it is a crucial aspect of the blade landing procedure to provide for proper alignment of the components in order to avoid collisions, tilted paring, breakages of the components or the like.

Document EP 3492734 A1 discloses a wind turbine assembly system and a method for assembling the wind turbine. A blade landing system is used with a plurality of flexible spring elements, which are attached at the hub and protruding therefrom towards a rotor blade, which is provided for being assembled to the hub. By moving the rotor blade towards the hub, the spring elements engage the root portion of the rotor blade and thereby align the rotor blade with the hub. By this process, the spring elements become deformed.

Another method for connecting a rotor blade to a hub by means of a different blade landing system is disclosed by document WO 2021/013584 A1. According to the method, a rope of the blade landing system is attached to the rotor blade and threaded into a passage of the blade landing system of the hub. By pulling the rope, the rotor blade is pulled towards the hub and is aligned therewith. According to a special embodiment, the passage comprises a rigid centering element for engaging a counter centering element of the rotor blade.

Known wind turbine assembly systems and methods have the disadvantage that the blade landing system has to be designed carefully with respect to flexibility and stiffness of the elements of the blade landing system. Moreover, since the blade landing system gets into contact with a wall section of the rotor blade, the rotor blade needs to be provided with an extra reinforcement structure to avoid damages during assembly. Especially for large rotor blades, spring elements need to be large and the rotor blade heavily reinforced and thus, the assembly system will be very expensive.

It is therefore the object of the present invention to eliminate or at least partially eliminate the disadvantages described above in the case of a wind turbine assembly system and a method for assembling a wind turbine. In particular, it is the object of the present invention to create a wind turbine assembly system and an assembly method, which avoid a complex design with respect to different rotor blade dimensions in a simple and inexpensive manner.

The above object is achieved by the claims. Accordingly, the problem is solved by a wind turbine assembly system with the features of the independent claim 1 and by a method for assembling a wind turbine with the features of the subordinate claim 10. Further features and details of the invention emerge from the subclaims, the description and the drawings. Features and details that are described in connection with the wind turbine assembly system according to the invention naturally also apply in connection with the method for assembling a wind turbine according to the invention and vice versa, so that with regard to the disclosure of the individual aspects of the invention, reference is or can always be made to each other.

According to a first aspect of the invention, the object is achieved by a wind turbine assembly system. The wind turbine system comprises a first portion, a second portion which is connectable to the first portion, a first aligning device, attached to the first portion and a second aligning device, attached to the second portion. According to the invention, the first aligning device comprises an engagement section in a center area of the first portion and a holding section for holding the engagement section in the center area, wherein the second aligning device is configured for engaging with the engagement section.

Within the scope of the invention, a wind turbine assembly system is considered as a plurality of components for being assembled for constituting a wind turbine. The components are larger parts of the wind turbine, such as rotor blades, hubs, nacelles, towers or tower segments, foundations or the like.

The first portion and the second portion are adjacent components of the wind turbine, which are configured for being mutually connected during an assembly procedure of the wind turbine. Preferably, the second portion is configured for being installed at a site of operation of the wind turbine first, and the first portion is configured for being installed at the already installed second portion. Alternatively, the first portion is configured for being installed at a site of operation of the wind turbine first, and the second portion is configured for being installed at the already installed first portion.

The first aligning device is attached to the first portion. The attachment is such that an orientation of the first portion can be manipulated during the assembly procedure by applying a force at the first alignment device.

The second aligning device is attached to the second portion. The attachment is such that a force can be transmitted from the second portion via the second alignment device to the first alignment device during the assembly procedure.

Moreover, according to the invention, the first aligning device comprises the engagement section in the center area of the first portion. The center area is considered an area closer to a center axis of the first portion. Preferably, the center area is within the physical limits of the first portion. In other words, it is preferred that the engagement section does not protrude from the first portion. Moreover, it is preferred that the center portion is spaced away from fixation means of the first portion in order to avoid damages during the alignment procedure. The engagement section is configured for engaging with the second aligning device during merging of the first portion and the second portion. It is preferred that the first aligning device is located inside the first part.

Furthermore, the first aligning device comprises the holding section for holding the engagement section. According to the invention, the holding section and the engagement section can be configured as one part or as separate parts. If configured as separate parts, it is preferred that the engagement section is fixedly attached to the holding section. Further preferred, the holding section is fixedly attached to the first portion. Preferably, the holding section comprises a predetermined elasticity for giving in due to a critical side force during the assembly procedure. This strength of the holding section is enough for aligning the first portion with the second portion, and there is enough elasticity to avoid damages when too high forces occur.

The second aligning device is configured for engaging with the engagement section of the first aligning device. It is preferred that the second aligning device has an elongated shape and is configured for dipping into the first portion for engaging the first aligning device. When the second aligning device is engaged with the first aligning device, a relative movement of the first portion and the second portion is limited, preferably in two dimensions. For this reason, it is preferred that the first aligning device and the second aligning device are configured to withstand side forces which may occur by relative movement of the first portion and the second portion while the first aligning device is engaged with the second aligning device.

A wind turbine assembly system according to the invention has the advantage over conventional wind turbine assembly systems that in a simple and inexpensive way, the aligning of the first portion and the second portion during the merging procedure is improved. Due to the arrangement of the engagement section in the center area of the first device, the engagement section is further spaced apart from fastening means for fastening the first portion to the second portion. This has the advantage that a collision of an aligning device with a fastening means, e.g., blade bolts of a rotor blade, can be avoided. Due to the design of the first aligning device, forces above a predetermined threshold can be better compensated. Beyond that, the wind turbine assembly system can be configured such that transport is easily possible with the aligning devices assembled or at least substantially assembled, and with a reduced risk of damaging the aligning devices.

According to a preferred further development of the invention, a wind turbine assembly system can provide that the holding section is configured as a web-like structure. Within the limits of the invention, a web-like structure is a structure with one or more web building elements and clearances between adjacent web building elements. Preferably, the web building elements are arranged for establishing node points between two or more web building elements. It is preferred that the web-like structure has a substantially two dimensional extension. For example, the web-like structure can have the shape of a spider web, a star, preferably with four, six, eight or more spikes, or the like. It is preferred that stiffening elements are embedded in the web-like structure to increase a stability of the web-like structure. This has the advantage that in a simple and inexpensive way, a first aligning device is provided. A web-like structure has the further advantage to better elastically absorb force peaks.

It is preferred according to the invention that the web-like structure is formed by one or more wire ropes, one or more strap bands or a plurality of bars. Thus, the web-like structure can be formed by a wire rope that is wound along a path for constituting the web-like structure. The wire rope can be arranged through bores or holding hooks of fixation means, such as bolt bushings, for fixing the web-like structure to the first portion. Alternatively, a plurality of wire ropes can form the web-like structure, e.g., each constituting a straight line between two fixation points. Alternatively, the web-like structure can be built by bars, such as tubes, profile elements, rods or the like. The bars are preferably attached to the first portion by fixation means or can be screwed into the first portion directly or into a fixation means of the first portion. It is preferred that the engagement section is a separate part, which is embedded and held by the wire rope or connected to the wire rope by additional fixation elements. This has the advantage that in a simple and inexpensive way, the absorption of the force peaks can be improved. Furthermore, the web-like structure can be removed better after the assembly procedure. A removable first aligning device can be reused.

More preferred, the first aligning device is attached to the first portion by means of bolt bushings. In this case, the bolt bushings for attaching the first aligning device are preferably configured to protrude inside the first portion. The protruding part of the bolt bushing may have a threaded portion, hook, bore or the like for attachment of the first aligning device. It is preferred that the first aligning device is attached to a plurality of adjacent bolt bushings, such like two or three adjacent bolt bushings. However, it can be provided that between two bolt bushings for attachment of the first aligning device, one or two ordinary bold bushings are arranged. In this matter, ordinary bolt bushings are considered as bolt bushings which are not configured or used for attaching the first aligning device. Alternatively, instead of bolt bushings, alternative holding devices can be used, located within bores of the first portion for the bolt bushings. Attachment points of the first aligning device to the first portion are preferably distributed, preferably evenly distributed, over the circumference of the first portion. This has the advantage that in a simple and inexpensive way, the attachment of the first aligning device to the first portion is improved.

In a particularly preferred embodiment, adjacent bolt bushings are coupled by a pressure distribution plate. It is preferred that one bolt bushing holds the first aligning device and the two or more adjacent bolt bushings do not hold the first aligning device. The pressure distribution plate is configured to distribute the pressure from the bolt bushing to the first portion. This has the advantage that in a simple and inexpensive way, damages to the first portion during the assembly procedure due to force overload, e.g., when the first alignment device and the second alignment device mutually engage, can be avoided.

Preferably the first aligning device comprises a guiding device with a lead-through, wherein the engagement section is formed by the guiding device. It is further preferred that the lead-through is spaced apart from fixation means for fixing the first portion to the second portion in order to avoid collisions with the fixation means during the assembly procedure. It is preferred that the lead-through runs through the engagement section. Preferably, the engagement section is surrounding the lead-through. The guiding device is preferably embedded into the holding device, e.g., into a web-like structure of the holding device. It is further preferred that the guiding device is more rigid than the holding device. Preferably, the guiding device has a tapered shape for improved alignment. This has the advantage that in a simple and inexpensive way, the alignment of the first portion with the second portion can be further improved.

According to a preferred embodiment of the invention, the second aligning device comprises a protruding member or a plurality of protruding members. The protruding member is configured for engaging with the engagement section of the first aligning device. The protruding member can be a rod, structural shape, profile element or the like. Preferably, the plurality of protruding members is arranged with a tilt and merge at a tip of the second aligning device. Preferably, the protruding members are screwed to the second portion. It is further preferred that the protruding members are interconnected at the tip, e.g., by screws, welds, a cap or the like. This has the advantage that in a simple and inexpensive way, the alignment of the first portion with the second portion can be further improved.

Particularly preferred, the second aligning device comprises a tapered enveloping surface for aligning the first aligning device with the second aligning device when the first portion and the second portion are merged. The enveloping shape can be the shape of a cone, a pyramid or the like. This has the advantage that in a simple and inexpensive way, the alignment of the first portion with the second portion can be further improved.

It is preferred according to the invention that the first portion is a rotor blade and the second portion is a hub or the first portion is a nacelle and the second portion is a tower of the wind turbine assembly system or that the first portion and the second portion are adjacent section elements of the tower or that the first portion is a tower and the second portion is a foundation of the wind turbine assembly system. Alternatively, it can be the other way around. The assembly of these components can be very challenging. Therefore, the usage of the aligning devices for pairing these components can be advantageous to improve the alignment process during the assembly procedure.

According to the second aspect of the invention, the object is achieved by a method for assembling a wind turbine. The method comprises:
- providing a wind turbine assembly system according to the first aspect of the invention,
- moving the first portion and the second portion towards each other such that the first aligning device engages with the second aligning device,
- aligning the first portion with the second portion through interaction of the first aligning device with the second aligning device, by further moving the first portion and the second portion towards each other, and
- connecting the first portion to the second portion.

The wind turbine assembly system can be provided in a preassembled state with some components of the wind turbine already installed at the site of operation of the wind turbine.

Subsequently, the first portion and the second portion are moved towards each other. This is preferably done by moving the first/second portion towards the already installed second/first portion. The moving is further performed such that the first aligning device engages with the second aligning device. Upon this engagement, one or more freedom degrees for a relative movement of the first portion and the second portion are limited. In other words, a relative deviation of the portions is limited in at least one dimension - preferably in two dimensions. Thus, alignment is improved.

By further moving the first portion and the second portion towards each other, the portions are further mutually aligned. This is preferably still done by moving the first/second portion towards the already installed second/first portion.

When the alignment is finished or within a predetermined tolerance, the first portion is connected to the second portion, e.g., by bolts, screws, nuts, rivets or the like.

The method for assembling a wind turbine according to the invention has all the advantages that have already been described for a wind turbine assembly system according to the first aspect of the invention. Accordingly, the method according to the invention has the advantage over conventional methods that in a simple and inexpensive way, the aligning of the first portion and the second portion during the merging procedure is improved. Due to the arrangement of the engagement section in the center area of the first device, the engagement section is further spaced apart from fastening means for fastening the first portion to the second portion. This has the advantage that a collision of an aligning device with a fastening means, e.g., blade bolts of a rotor blade, can be avoided. Due to the design of the first aligning device, forces above a predetermined threshold can be better compensated. Beyond that, the providing of the wind turbine assembly system can be improved due to the configuration of the wind turbine assembly system with the aligning devices assembled or at least substantially assembled, and with a reduced risk of damaging the aligning devices.

Further advantages, features and details of the invention unfold from the following description, in which by reference to drawings, working examples of the present invention are described in detail. Thereby, the features from the claims as well as the features mentioned in the description can be essential for the invention as taken alone or in an arbitrary combination. In the drawings:
Figure 1 shows a schematic perspective view of a part of a wind turbine assembly system of a preferred embodiment of the invention,
Figure 2 shows a schematic front view of a first aligning device of a preferred first embodiment of the invention,
Figure 3 shows a schematic front view of a first aligning device of a preferred second embodiment of the invention,
Figure 4 shows a schematic perspective view of a part of the first aligning device of the preferred second embodiment of fig. 3.
Figure 5 shows a schematic sectional view of a first portion of a preferred embodiment of the invention.
Figure 6 shows a schematic sectional view of a first portion of a preferred embodiment of the invention.
Figure 7 shows a schematic perspective view of a second portion of a preferred embodiment of the invention.
Figure 8 shows a schematic perspective view of a first portion of a preferred embodiment of the invention.
Figure 9 shows a schematic perspective view of a wind turbine assembly system according to a preferred embodiment of the invention.
Figure 10 shows a process chart of a preferred embodiment of a method according to the invention.

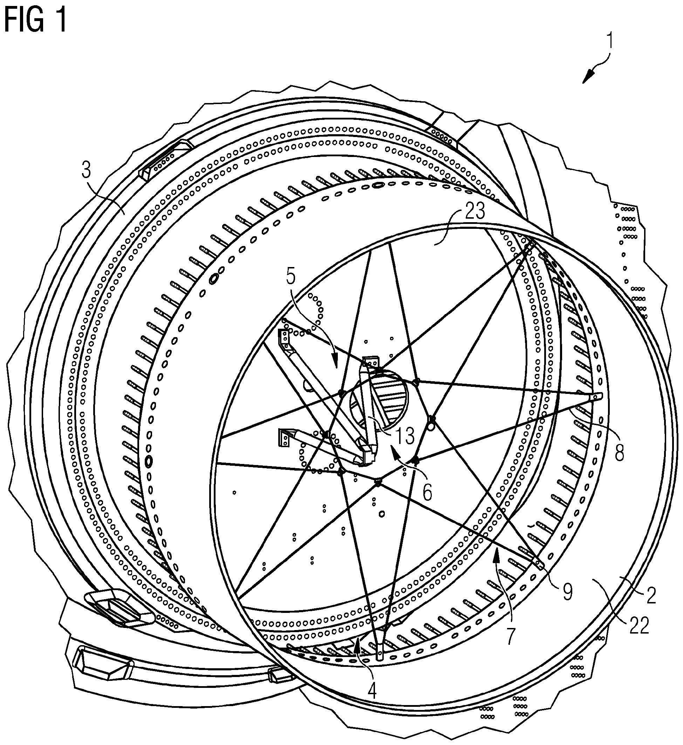

Elements with the same function and effectiveness are denoted each in figures 1 - 10 with the same reference numbers.

In fig. 1, a part of a wind turbine assembly system 1 of a preferred embodiment of the invention is shown in a schematic perspective view. The wind turbine assembly system 1 comprises a first portion 2 and a second portion 3. In this figure, the first portion 2 is spaced apart from the second portion 3.

The first portion 2 comprises a first aligning device 4. The first aligning device 4 comprises wire ropes 8, forming a star-shaped web-like structure with a holding section 7 and an engagement section 6 in a center area of the first portion 2. In the holding section 7, the wire ropes 8 are attached to a first wall 22 of the first portion 2 via bolt bushings 9.

The second portion 3 comprises a second aligning device 5. The second aligning device 5 comprises three protruding members 13, attached to a second wall 23 of the second portion 3, forming a vertex. In the illustrated state, the protruding members 13 are aligned with the engagement section 6 and about to dip into the engagement section 6. In the procedure of further moving the first portion 2 and the second portion 3 together, the first aligning device 4 and the second aligning device 5 will engage with each other and align the first portion 2 with the second portion 3.

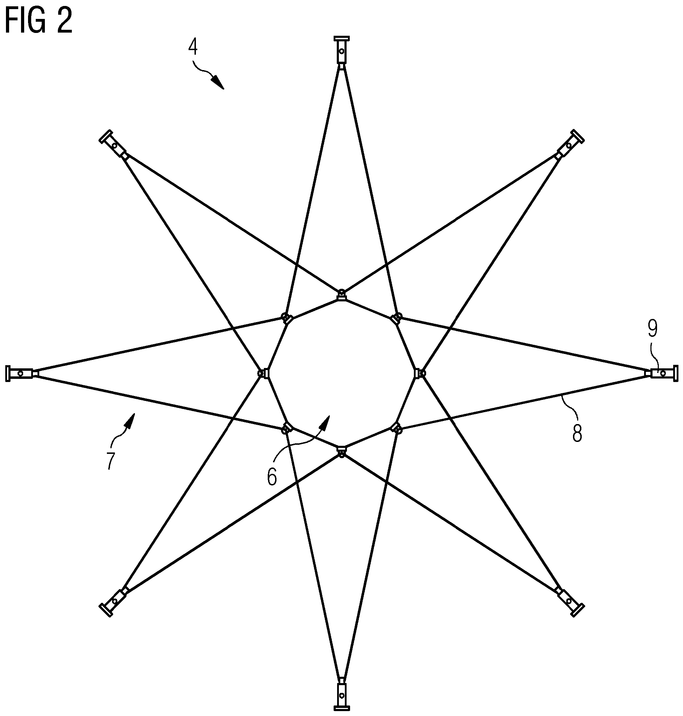

Fig. 2 shows a first aligning device 4 of a preferred first embodiment of the invention in a schematic front view. The first aligning device 4 comprises a wire rope 8, guided through bolt bushings 9, forming a web-like structure with an engagement section 6 and a holding section 7. In this embodiment, the shape of the engagement section 6 is octagonal.

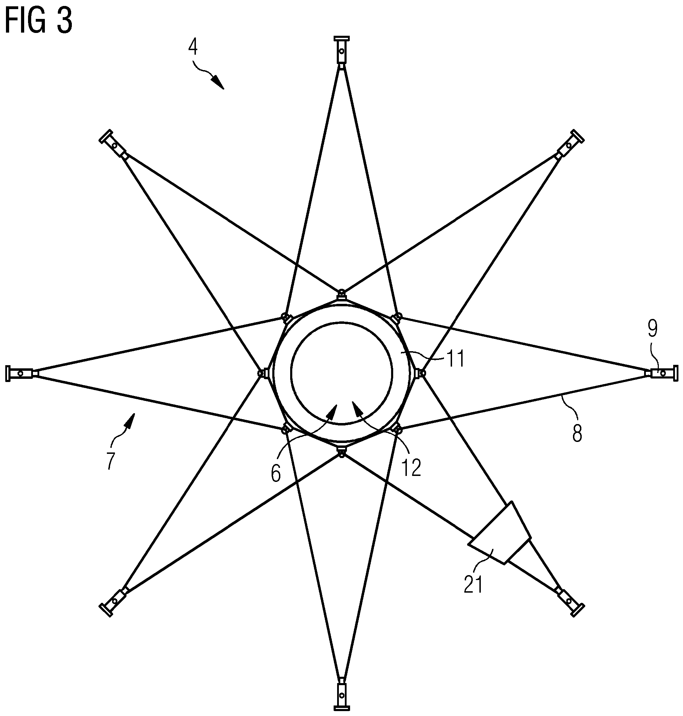

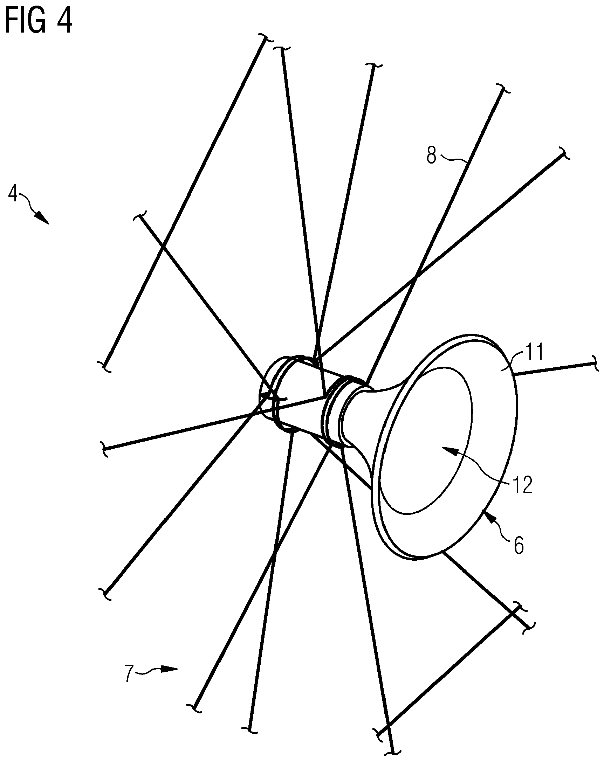

In fig. 3, a first aligning device 4 of a preferred second embodiment of the invention is shown in a schematic front view. Fig. 4 shows a part of the first aligning device 4 of fig. 3 in a schematic perspective view. In this embodiment, the holding section 7 is formed by the wire rope 8, and the engagement section 6 is provided by a guiding device 11 with a central lead-through 12. For increasing the stability of the holding section 7, a stiffening element 21 is located between adjacent wire ropes 8. In this embodiment, the shape of the engagement section 6 is circular.

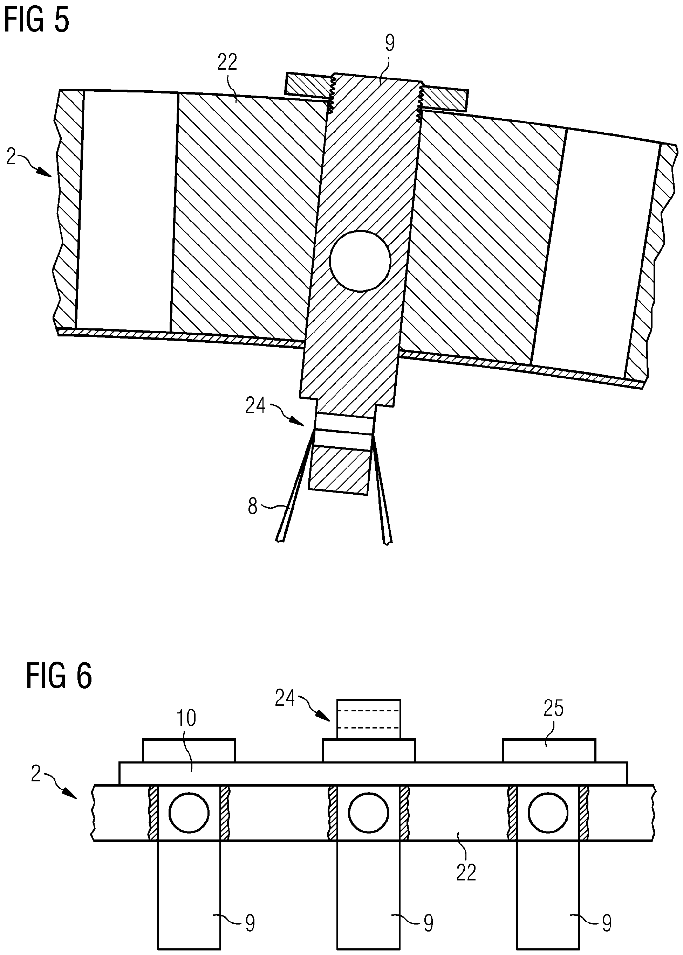

In fig. 5, a first portion 2 of a preferred embodiment of the invention is shown in a schematic sectional view. A bolt bushing 9 is arranged in a first wall 22 of the first portion 2. The wire rope 8 is guided through a bore 24 of the bolt bushing 9.

Fig. 6 shows a first portion 2 of a preferred embodiment of the invention in a schematic sectional view. In this figure, three adjacent bolt bushings 9 are shown, wherein the bolt bushing 9 in the center comprises an additional bore 24 for fixing the not illustrated wire rope 8. Between head sections 25 or nuts of the bolt bushings 9, a pressure distribution plate 10 is located for distributing pressure of the bolt bushings 9 to the first wall 22.

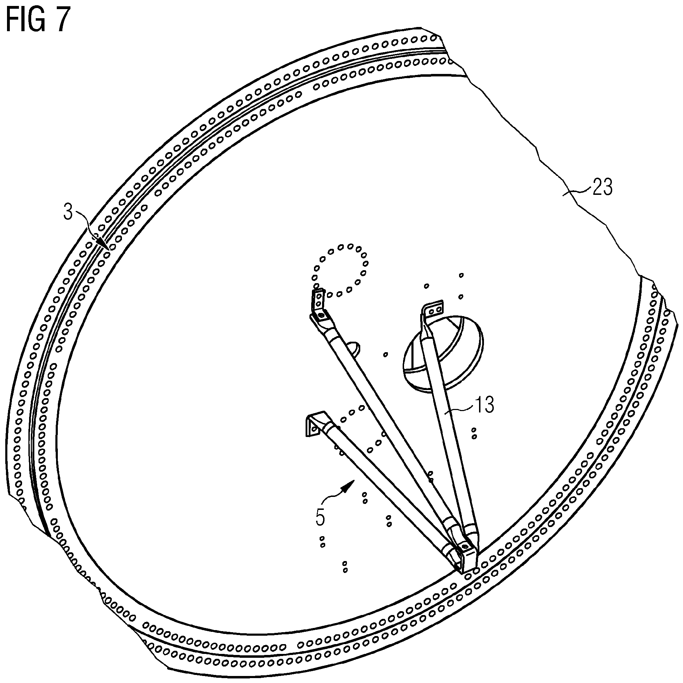

In fig. 7, a second portion 3 of a preferred embodiment of the invention is shown in a schematic perspective view. The second portion 3 comprises a second aligning device 5 attached to a second wall 23 of the second portion 3. The second aligning device 5 comprises three protruding members 13, forming a vertex.

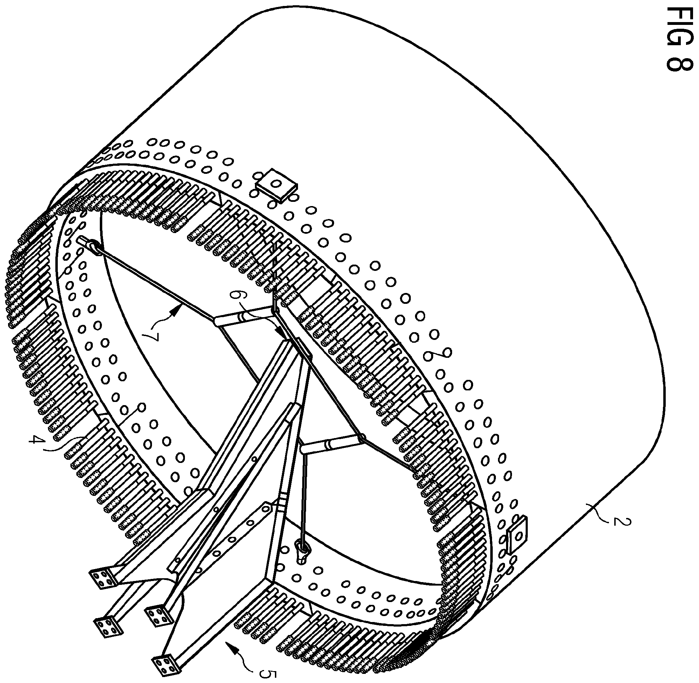

Fig. 8 shows a first portion 2 of a preferred embodiment of the invention in a schematic perspective view. In this embodiment, a shape of the engagement section 6 is different from the engagement section 6 of fig. 2. In this embodiment, the shape of the engagement section 6 is rectangular.

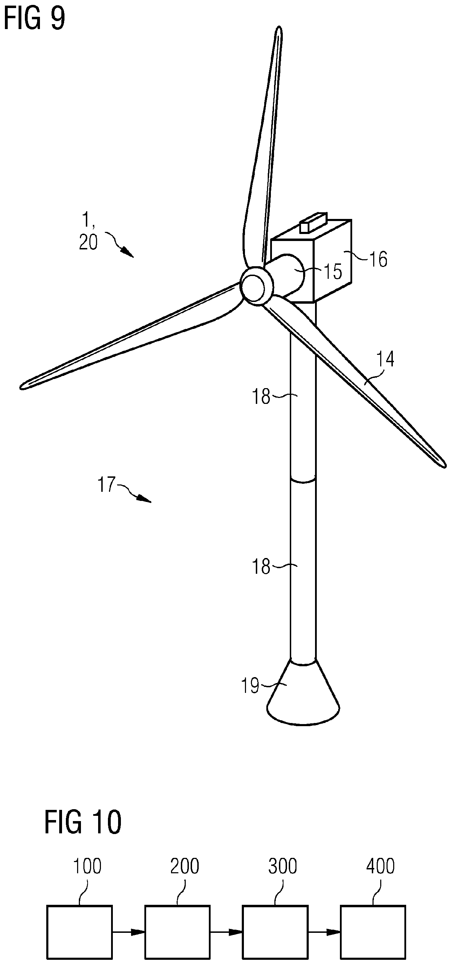

Fig. 9 shows a wind turbine assembly system 1 according to a preferred embodiment of the invention in a schematic perspective view. In the illustrated state, the wind turbine assembly system 1 is assembled to a wind turbine 20. The wind turbine assembly system 1 comprises a tower 17, composed of a plurality of section elements 18. The tower 17 is arranged on a foundation 19. On the top of the tower 17, a nacelle 16 with a hub 15 is arranged. On the hub 15, three rotor blades 14 are mounted.

In fig. 10, a process chart of a preferred embodiment of a method according to the invention is shown. In a first action 100, a wind turbine assembly system 1 according to the invention is provided. In a second action 200, the first portion 2 and the second portion 3 are roughly arranged and moved towards each other in a way that the first aligning device 4 of the first portion 2 engages with the second aligning device 5 of the second portion 3. In this state, a relative movement between the first portion 2 and the second portion 3 with respect to two freedom degrees is limited due to the engagement of the first aligning device 4 with the second aligning device 5.

In a third action 300, the first portion 2 and the second portion 3 are moved towards each other in an assembly direction. Due to the interaction of the first aligning device 4 with the second aligning device 5, the first portion 2 is aligned with the second portion 3. The third action 300 is performed until the first portion 2 and the second portion 3 are in a mutual assembly position. The mutual assembly position is a position, in which the first portion 2 can be fixed to the second portion 3. In a fourth action 400, the first portion 2 is connected to the second portion 3 by fixation devices, such as bolts, screws, nuts, rivets or the like.

## Claims

1. Wind turbine assembly system (1), comprising a first portion (2), a second portion (3) which is connectable to the first portion (2), a first aligning device (4), attached to the first portion (2) and a second aligning device (5), attached to the second portion (3),
**characterized in,**
**that** the first aligning device (4) comprises an engagement section (6) in a center area of the first portion (2) and a holding section (7) for holding the engagement section (6), wherein the second aligning device (5) is configured for engaging with the engagement section (6).

2. Wind turbine assembly system (1) according to claim 1,
**characterized in,**
**that** the holding section (7) is configured as a web-like structure.

3. Wind turbine assembly system (1) according to claim 2,
**characterized in,**
**that** the web-like structure is formed by one or more wire ropes (8), one or more strap bands or a plurality of bars.

4. Wind turbine assembly system (1) according to any of the previous claims,
**characterized in,**
**that** the first aligning device (4) is attached to the first portion (2) by means of bolt bushings (9).

5. Wind turbine assembly system (1) according to claim 4,
**characterized in,**
**that** adjacent bolt bushings (9) are coupled by a pressure distribution plate (10).

6. Wind turbine assembly system (1) according to any of the previous claims,
**characterized in,**
**that** the first aligning device (4) comprises a guiding device (11) with a lead-through (12), wherein the engagement section (6) is formed by the guiding device (11).

7. Wind turbine assembly system (1) according to any of the previous claims,
**characterized in,**
**that** the second aligning device (5) comprises a protruding member (13) or a plurality of protruding members (13).

8. Wind turbine assembly system (1) according to any of the previous claims,
**characterized in,**
**that** the second aligning device (5) comprises a tapered enveloping surface for aligning the first aligning device (4) with the second aligning device (5) when the first portion (2) and the second portion (3) are merged.

9. Wind turbine assembly system (1) according to any of the previous claims,
**characterized in,**
**that** the first portion (2) is a rotor blade (14) and the second portion (3) is a hub (15) or the first portion (2) is a nacelle (16) and the second portion (3) is a tower (17) of the wind turbine assembly system (1) or that the first portion (2) and the second portion (3) are adjacent section elements (18) of the tower (17) or that the first portion is a tower (17) and the second portion is a foundation (19) of the wind turbine assembly system (1).

10. Method for assembling a wind turbine (20) comprising:
- providing a wind turbine assembly system (1) according to any of the previous claims,
- moving the first portion (2) and the second portion (3) towards each other such that the first aligning device (4) engages with the second aligning device (5),
- aligning the first portion (2) with the second portion (3) through interaction of the first aligning device (4) with the second aligning device (5), by further moving the first portion (2) and the second portion (3) towards each other, and
- connecting the first portion (2) to the second portion (3).
